# EUROPEAN PATENT APPLICATION

(11) **EP 4 365 077 A1**
(43) Date of publication of application: **08.05.2024**
(21) Application number: 23202857.1
(22) Date of filing: 10.10.2023
(51) Int. Cl.: B64C 3/18, B64C 11/26, B32B 5/18, B64D 27/10

(54) **AIRFOIL AND METHODS OF ASSEMBLY THEREOF**

(30) Priority: 03.11.2022 US 202217979853
(71) Applicant: General Electric Company, Schenectady, NY 12345 (US)
(72) Inventor: BRYANT, JR, Gary Willard, Evendale, 45241 (US); KRAY, Nicholas Joseph, West Chester, 45069 (US); XIE, Ming, Cincinnati, 45215 (US); KRYJ-KOS, Elzbieta, Evendale, 45241 (US); ARMSTRONG, Douglas Lorrimer, Lynn, 01905 (US); DAGGETT, Nicholas, Camden, 04843 (US); WORTHOFF, Frank, Cincinnati, 45215 (US); FINN, Scott Roger, Cincinnati, 45215 (US)
(74) Representative: Openshaw & Co.

(57) **Abstract**

The present disclosure relates to an airfoil assembly (100) for a turbine engine (10) and methods of assembly thereof. The airfoil assembly (100) generally includes a composite airfoil (62) and a spar (140). The composite airfoil (62) has a pressure side (78) and a suction side (80) extending in an axial direction (A) between a leading edge (48) and a trailing edge (46) defining a chordwise direction (C) and extending radially between a root (102) and a tip (104) defining a spanwise direction (S) and having a span-length (L). The spar (140) includes a first portion (150) including a first material (155) and a second portion (160) joined at an interface (170) with the first portion (150). The second portion (160) further includes a second material (165), different from the first material (155), joined to the first portion (150) at an interface (170). The method (200) generally includes joining the first portion (150) with the second portion (160) at the interface (170); and assembling the spar (140) with the composite airfoil (62).

## Description

### FIELD

The present subject matter relates generally to airfoils, such as those suitable for use in gas turbine engines.

### BACKGROUND

A gas turbine engine generally includes a turbomachine and a rotor assembly. Gas turbine engines, such as turbofan engines, may be used for aircraft propulsion. In the case of a turbofan engine, the rotor assembly may be configured as a fan assembly. The turbomachine may include a spool arrangement. For example, the spool arrangement may include a high pressure, high speed spool and a low pressure, low speed spool. A combustion section of the turbomachine receives pressurized air, which is mixed with fuel and combusted within a combustion chamber to generate combustion gases. The combustion gases are provided to the spool arrangement. For example, the combustion gases may be provided first to a high pressure turbine of the high pressure spool, driving the high pressure spool, and subsequently to a low speed turbine of the low speed spool, driving the low speed spool.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of an exemplary turbine engine including a fan blade;
FIG. 2 is a cross-sectional side view of an exemplary unducted rotor engine;
FIG. 3 provides a perspective view of an exemplary airfoil for use in a turbine engine, such as the exemplary turbine engine of FIG. 1 or the exemplary unducted rotor engine of FIG. 2;
FIG. 4 is a schematic of an embodiment an exemplary airfoil showing a skin covering the airfoil and a cavity filled with a foam;
FIG. 5 provides a side view of an embodiment of an exemplary second portion of a spar;
FIG. 6A provides a cross-section view of an embodiment of an exemplary spar connecting a first portion to a second portion;
FIG. 6B provides a schematic of an embodiment of an exemplary spar connecting a first portion to a second portion;
FIG. 7 provides a cross-section view of an embodiment of an exemplary spar, where the spar has a C-shape;
FIG. 8 provides a cross-section view of an embodiment of an exemplary spar, where the spar has an H-shape;
FIG. 9 provides a cross-section view of an embodiment of an exemplary spar, where the spar has a Z shape;
FIG. 10A provides a cross-section view of an embodiment of an exemplary spar, where the spar has an X shape;
FIG. 10B provides a cross-section view of an embodiment of an exemplary spar, where the spar has an X shape;
FIG. 11 provides a cross-section view of an embodiment of an exemplary spar, where the spar has a two-opposing-plates shape;
FIG. 12 provides a cross-section view of an embodiment of an exemplary spar, where the spar has circular shape, such as an O shape; and
FIG. 13 provides a cross-section view of an embodiment of an exemplary spar, where a second portion of the spar has a square shape; and
FIG 14 shows a diagram of an exemplary method of assembling an airfoil assembly having a composite airfoil and a spar.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first," "second," and "third" may be used interchangeably to distinguish one component from another and are not intended to signify location or importance of the individual components.

Relative positions within a gas turbine engine may be referred to in conjunction with normal operational attitude of the gas turbine engine. As used herein, the term "forward" or "upstream" refers to moving in a direction toward the engine inlet, or a component being relatively closer to the engine inlet as compared to another component. The term "aft" or "downstream" used in conjunction with "forward" or "upstream" refers to a direction toward the outlet of the engine or being relatively closer to the engine outlet as compared to another component. Additionally, as used herein, the terms "radial" or "radially" refer to a dimension extending between a center longitudinal axis of the engine and an outer engine circumference. Furthermore, as used herein, the term "set" or a "set" of elements can be any number of elements, including only one.

The terms "coupled," "fixed," "attached to," "joined," and the like refer to both direct coupling, fixing, or attaching, as well as indirect coupling, fixing, or attaching through one or more intermediate components or features, unless otherwise specified herein.

As used herein, "joined" may mean "connected," "united," "fastened," linked," "adjoined," "attached," or any other definition as known to those of ordinary skill in the art.

The singular forms "a," "an," and "the" include plural references unless the context clearly dictates otherwise.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

It should be appreciated that the terms "low" and "high," or their respective comparative degrees (e.g., -er, where applicable), when used with compressor, turbine, shaft, or spool components, each refer to relative speeds within an engine unless otherwise specified. For example, a "low turbine" or "low-speed turbine" defines a component configured to operate at a rotational speed, such as a maximum allowable rotational speed, lower than a "high turbine" or "high-speed turbine" at the engine. Alternatively, unless otherwise specified, the aforementioned terms may be understood in their superlative degree. For example, a "low turbine" or "low-speed turbine" may refer to the lowest maximum rotational speed turbine within a turbine section, a "low compressor" or "low-speed compressor" may refer to the lowest maximum rotational speed turbine within a compressor section, a "high turbine" or "high-speed turbine" may refer to the highest maximum rotational speed turbine within the turbine section, and a "high compressor" or "high-speed compressor" may refer to the highest maximum rotational speed compressor within the compressor section. Similarly, the low-speed spool refers to a lower maximum rotational speed than the high-speed spool. It should further be appreciated that the terms "low" or "high" in such aforementioned regards may additionally, or alternatively, be understood as relative to minimum allowable speeds, or minimum or maximum allowable speeds relative to normal, desired, steady state, etc. operation of the engine.

In a turbofan engine, the fan assembly generally includes a fan having a plurality of airfoils or fan blades extending radially outwardly from a central hub and/or a disk. During certain operations, the fan blades provide an airflow into the turbomachine and/or over the turbomachine to generate thrust. At least certain modern fan blades are formed of composite material(s) to reduce a weight of the fan blades. Fan blades of composite material(s) may be subjected to a foreign object ingestion event, such as an ice ingestion or bird strike. Improvements to airfoil design directed to accommodating these events would be welcomed in the art.

An airfoil for a gas turbine engine, such as a fan blade for a fan assembly of a turbofan engine or turboprop engine, is generally provided. The airfoil may generally be formed a composite body portion and a spar enclosed within the composite body portion. The spar is constructed of at least two materials, such as a metal material and a composite material, with a design to increase the stiffness of the entire airfoil while reducing weight in the upper portion (i.e., the radially outer portion) of the airfoil. For example, the composite material may form a radially outer portion of the spar, while the metal material may form a radially inner portion of the spar.

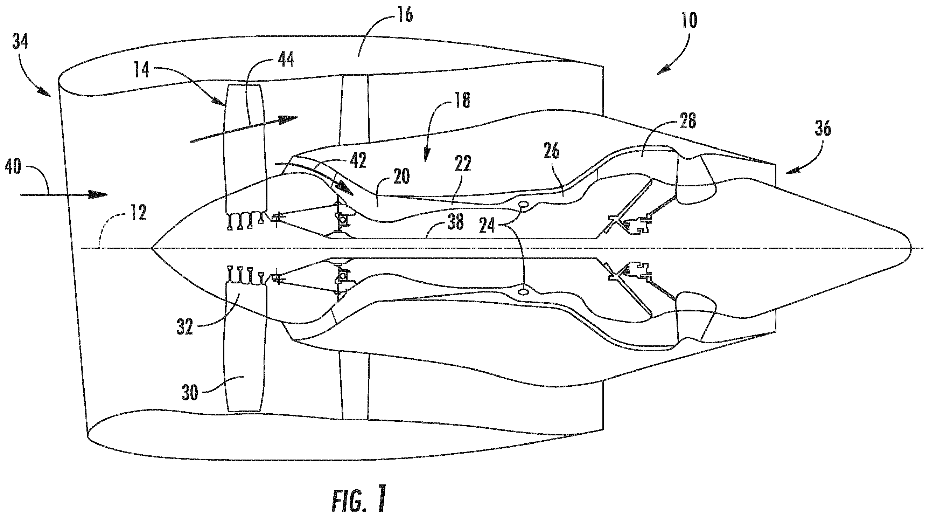

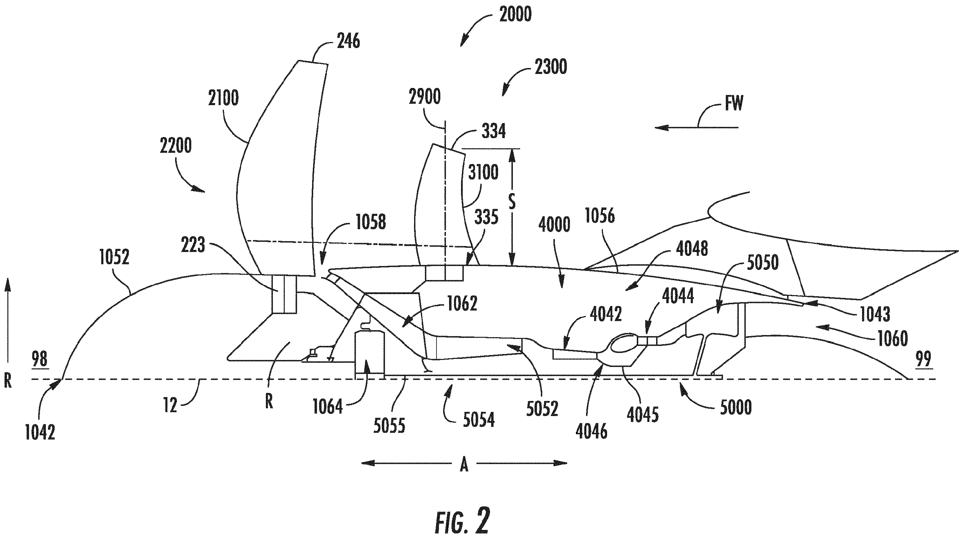

Referring now to the drawings, wherein identical numerals indicate the same elements throughout the figures, FIG. 1 illustrates an exemplary turbine engine 10 having a longitudinal axis defining a centerline axis 12 of the engine. More particularly, for the embodiment of FIG. 1, the turbine engine 10 is a high-bypass turbofan jet engine. However, in other embodiments, aspects of the present disclosure may be incorporated into any other suitable gas turbine engine. For example, in other exemplary embodiments, the turbine engine 10 may be an unducted turbofan engine (as seen in FIG. 2, described below), a turboprop engine, an aeroderivative turbine engine, or the like.

As shown in FIG. 1, a fan assembly 14, a nacelle 16, and an engine core 18 can be included in the turbine engine 10. The engine core 18 includes a low-pressure compressor 20, a high-pressure compressor 22, a combustor assembly 24, a high-pressure turbine 26, and a low-pressure turbine 28 arranged in a serial, axial flow relationship. The fan assembly 14 includes an array of fan blades 30 extending radially outward from a rotor disc 32. The turbine engine 10 has an intake side 34 and an exhaust side 36. The fan blades 30 and low-pressure turbine 28 are coupled together with a rotor shaft 38. The fan assembly 14 and engine core 18 are at least partially positioned within the nacelle 16.

In operation, air 40 flows through the fan assembly 14 and a first airflow portion 42 of the airflow is channeled through the low-pressure compressor 20 and high-pressure compressor 22 wherein the first airflow portion 42 of the airflow is further compressed and delivered to the combustor assembly 24. Hot products of combustion (not shown) from the combustor assembly 24 are utilized to drive the high-pressure turbine 26 and the low-pressure turbine 28 and thus produce engine thrust. A second airflow portion 44 of the airflow discharged from fan assembly 14 is utilized to bypass around the engine core 18.

It should be appreciated, however, that the exemplary turbine engine 10 depicted in FIG. 1 as a turbofan engine is by way of example only, and that in other exemplary embodiments, the turbine engine 10 may have any other suitable configuration. For example, in other exemplary embodiments, the fan assembly 14 may be configured as a variable pitch fan including, e.g., a suitable actuation assembly for rotating the plurality of fan blades 30 about respective pitch axes, the turbine engine 10 may be configured as a geared turbofan engine having a reduction gearbox between the LP shaft 38 and fan assembly 14, etc. It should also be appreciated, that in still other exemplary embodiments, aspects of the present disclosure may be incorporated into any other suitable gas turbine engine. For example, in other exemplary embodiments, aspects of the present disclosure may be incorporated into, e.g., a turboprop engine.

For instance, referring now to FIG. 2, an unducted rotor engine 2000 including a vane assembly 2300 in aerodynamic relationship with a bladed rotor assembly 2200 is shown. The vane assembly 2300 is positioned aft (i.e., proximate to aft end 99) or generally downstream (relative to normal forward operation, schematically depicted by arrow FW) of an unducted rotor assembly 2200. In certain embodiments, the vane assembly 2300 is configured to adjust vane pitch angle 2900. The vane pitch angle 2900 is configured to output a desired thrust vector based on a desired engine operation (e.g., forward thrust, neutral or no thrust, or reverse thrust) and desired acoustic noise level.

As is seen from FIG. 2, the unducted rotor engine 2000 takes the form of an open rotor propulsion system and has a rotor assembly 2200 which includes an array of airfoil blades 2100 around the centerline axis 12 of the unducted rotor engine 2000. The array of airfoil blades 2100 are arranged in typically equally spaced relation around the centerline axis 12, and each blade in the array of airfoil blades 2100 has a root 223 and a tip 246 and a span S defined therebetween.

Additionally, the unducted rotor engine 2000 includes a gas turbine engine having a core engine 4000 (or high-speed system) and a low-speed system 5000. The core engine 4000 generally includes a high-speed compressor 4042, a high-speed turbine 4044, and a high-speed shaft 4045 extending therebetween and connecting the high-speed compressor 4042 and high-speed turbine 4044. The high-speed compressor 4042, the high-speed turbine 4044, and the high-speed shaft 4045 may collectively define and be referred to as a high-speed spool 4046 of the unducted rotor engine 2000. Further, a combustion section 4048 is located between the high-speed compressor 4042 and high-speed turbine 4044. The combustion section 4048 may include one or more configurations for receiving a mixture of fuel and air and providing a flow of combustion gasses through the high-speed turbine for driving the high-speed spool 4046.

The low-speed system 5000 similarly includes a low-speed turbine 5050, a low-speed compressor or booster5052, and a low-speed shaft 5055 extending between and connecting the low-speed compressor 5052 and low-speed turbine 5050. The low-speed compressor 5052, the low-speed turbine 5050, and the low-speed shaft 5055 may collectively define and be referred to as a low-speed spool 5054 of the 5000 unducted rotor engine 2000.

Although the unducted rotor engine 2000 is depicted with the low-speed compressor 5052 positioned forward (i.e., proximate to a forward end 98) of the high-speed compressor 4042, in certain embodiments the high-speed compressor 4042 and the low-speed compressor 5052 may be in interdigitated arrangement, i.e., rotary airfoils of the low-speed compressor 5052 are in alternating arrangement along the gas flowpath with rotary airfoils of the high-speed compressor 4042. Additionally, or alternatively, although the unducted rotor engine 2000 is depicted with the high-speed turbine 4044 positioned forward of the low-speed turbine 5050, in certain embodiments the high-speed turbine 4044 and low-speed turbine 5050 may be in interdigitated arrangement. Although certain embodiments or descriptions of rotary elements provided herein may include "low-pressure" or "high-pressure," it should be appreciated that the rotary elements may additionally, or alternatively, refer to "low-speed" or "high-speed," respectively, such as based on interdigitated arrangements or otherwise provided above.

Still referring to FIG. 2, the core engine 4000 is generally encased in a cowl 1056. The vane assembly 2300 includes a vane 3100 disposed around the centerline axis 12, and each vane 3100 has a root 335, a tip 334, and a span S defined therebetween. These vanes 3100 are mounted to a stationary frame and do not rotate relative to the centerline axis 12. Additionally, the vane assembly 2300 is extended from the cowl 1056 and positioned aft of the rotor assembly 2200. In various embodiments, the maximum diameter is defined as a flowpath surface facing outward along the radial direction R in fluid communication with the flow of fluid egressed from the rotor assembly 2200. In certain embodiments, the maximum diameter of the cowl 1056 corresponds substantially to a location or positioning of the root 335 of the vane 3100 of the vane assembly 2300 extended from the cowl 1056. The rotor assembly 2200 further includes a hub 1052 extended forward of the array of airfoil blades 2100

In certain embodiments, the unducted rotor engine 2000 extends from a forward end 1042 of the hub 1052 to an aft end 1043 of the cowl 1056. In still other embodiments, the unducted rotor engine 2000 defines the length L from an aft end 1043 of the cowl 1056, in which the aft end 1043 is positioned at an egress end or exhaust 1060 of the core engine 4000.

Moreover, it will be appreciated that the unducted rotor engine 2000 further that the cowl 1056 defines at least in part an inlet 1058, the exhaust 1060, and a turbomachinery flowpath 1062 extending between the inlet 1058 and the exhaust 1060. The inlet 1058 is for the embodiment shown an annular or axisymmetric 360 degree inlet 1058 located between the rotor assembly 2200 and the vane assembly 2300, and provides a path for incoming atmospheric air to enter the turbomachinery flowpath 1062 (and compressors, combustion section, and turbines) radially inward of the vane assembly 2300. Such a location may be advantageous for a variety of reasons, including management of icing performance as well as protecting the inlet 1058 from various objects

As is depicted, the rotor assembly 2200 is driven by the turbomachinery, and more specifically, is driven by the low-speed spool 5054. More specifically, still, unducted rotor engine 2000 in the embodiment shown in FIG. 2 includes a power gearbox 1064, and the rotor assembly 2200 is driven by the low-speed spool 5054 of the turbomachinery across the power gearbox 1064. In such a manner, the array of airfoil blades 2110 of the rotor assembly 2200 may rotate around the centerline axis 12 and generate thrust to propel the unducted rotor engine 2000, and hence an aircraft to which it is associated, in a forward direction FW.

The power gearbox 1064 may include a gearset for decreasing a rotational speed of the low-speed spool 5054 relative to the low-speed turbine 5050, such that the rotor assembly 2200 may rotate at a slower rotational speed than the low-speed spool 5054.

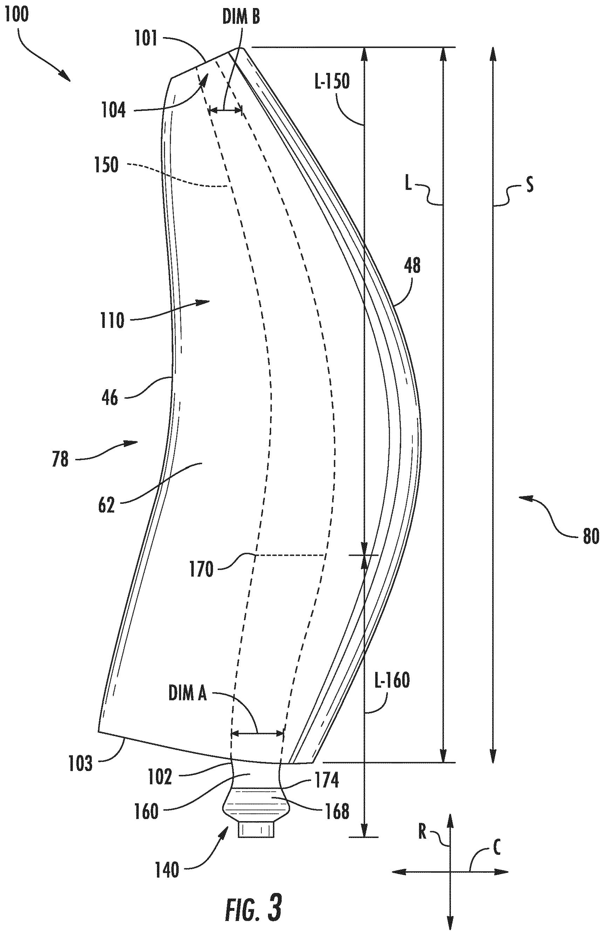

Referring to FIG. 3, an exemplary airfoil assembly 100 is shown. The airfoil assembly 100 generally includes a composite airfoil 62 and a spar 140 configured to support the composite airfoil 62. The composite airfoil 62 has a pressure side 78 and a suction side 80 extending in an axial direction between a leading edge 48 and a trailing edge 46 defining a chordwise direction (C) and extending in a radial direction (R) between a radially outer edge 101 and a radially inner edge 103 defining a span-wise direction (S) and having a span-length (L). The composite airfoil 62 may further define a flowpath radially above the radially inner edge 103. The spar 140 (shown in FIG. 3 with a dotted line) defines a root 102 and a tip 104. Generally, the spar 140 includes a first portion 150 including a first material and a second portion 160 including a second material joined to the first portion 150, where the second material is different from the first material. The first portion 150 and the second portion 160 are joined at an interface 170, and, in the depicted embodiment, the interface 170 is also within the airfoil 62. However, in other embodiments, the interface 170 may be below the airfoil 62. In some embodiments, the entirety of the second portion 160 may be below the radially inner edge 103 and/or below the airfoil 62. It will be appreciated that in alternative embodiments, at least a portion of the second portion 160 may be at and/or above the radially inner edge 103. Additionally, in certain non-limiting embodiments, at least one of the first portion 150 or the second portion 160 may have a cross-sectional shape along its length in the chordwise direction C, as discussed more in depth below. In particular embodiments, the spar 140 may have a changing cross-sectional shape (e.g., a changing cross-sectional dimensional width) along its length in the chordwise direction C. For example, the first portion 150, the second portion 160, or both may have a changing cross-sectional shape (e.g., a changing cross-sectional dimensional width) along its length in the chordwise direction C.

As described herein, the interface 170 refers to any portion of overlap between the first portion 150 and the second portion 160. For example, the interface 170 may define an overlap portion that is 5% or more of the total length of the spar 140 (i.e., the sum of L-150 and L-160).

In some embodiments, the second portion 160 may be positioned near the radially inner edge 103 end of the composite airfoil 62 while the first portion 150 may be positioned towards the tip 104 of the composite airfoil 62. The first portion 150 may extend radially away from the interface 170 for a length L-150. Similarly, the second portion 160 may extend from the interface 170 in the radial direction R inwardly, away from the first portion 150. In some embodiments, the second portion 160 may extend from the interface 170 towards the centerline axis 12 of the turbine engine 10 (FIG. 1). The spar 140 and, more particularly, the second portion 160 may extend for a length L-160 that is at least a portion of the span-length L. For example, in some embodiments, the second portion 160 may extend in the radial direction R, e.g., from the interface 170, for the length L-160, where the length L-160 is 75% or less of the span-length L, such as 10% to 75% of the span-length L. Additionally or alternatively, the second portion 160 may extend in the radial direction R for the length L-160 that is 5% and 40% of the span-length L, such as 10% and 30% of the span-length L (e.g., 15% and 25% of the span-length L). Further, in some embodiments, the second portion 160 may extend to below the radially inner edge 103. In other embodiments, however, the second portion 160 may be located entirely below the radially inner edge 103 or entirely above the radially inner edge 103.

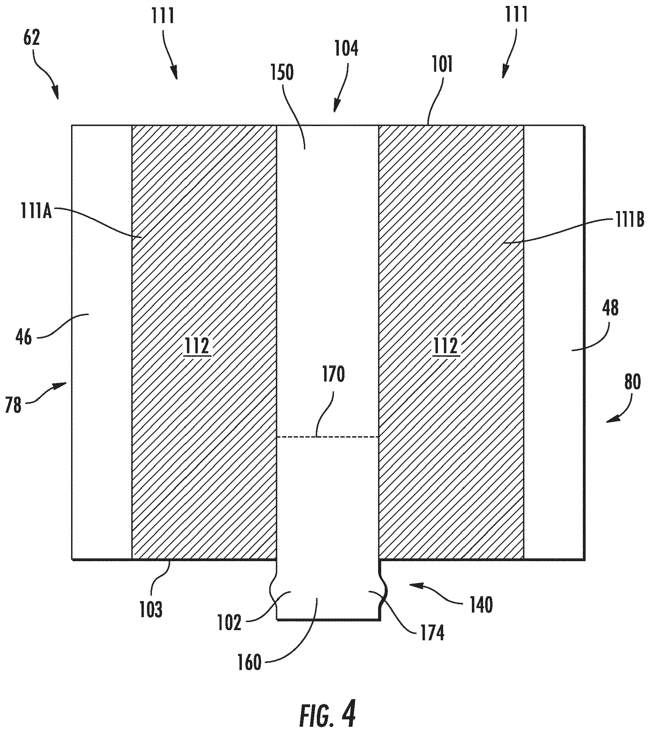

The spar 140 may further include an attachment 174, such as an innermost retention point of attachment for the composite airfoil 62, e.g., where the airfoil assembly 100 attaches to the turbine engine 10. The attachment 174 may be located on the second portion 160, as shown in FIG. 3 and FIG. 4. However, in some embodiments, the attachment 174 may be located on a third portion of the spar 140, where the third portion includes a third material that is not the same as the first material or the second material. In yet other embodiments, e.g., where the third portion is coupled to the spar 140 radially below the second portion 160, the third material may be the same as the first material. It will also be appreciated that the third material may be the same as the second material where the second portion 160 and the third portion are either continuous or discontinuous (e.g., manufactured separately before being coupled together). Further, also as depicted, the attachment 174 may be positioned below the radially inner edge 103. In embodiments where the spar 140 includes multiple portions, the attachment 174 may be positioned on any of the first portion 150, the second portion 160, or the third portion (not shown), so long as the portion that the attachment 174 is positioned on or below the radially inner edge 103.

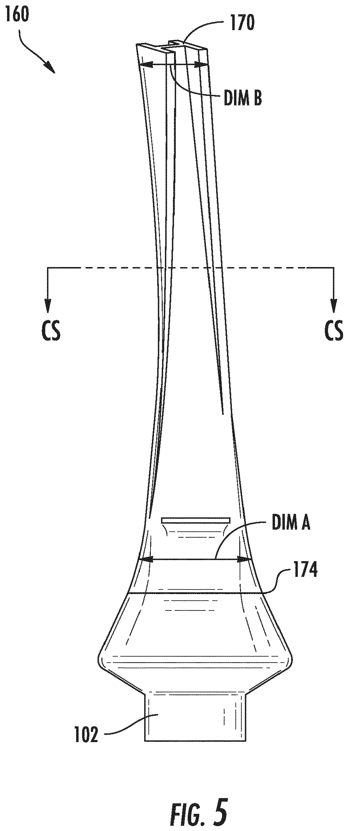

Further, the first portion 150, the second portion 160, or both, may protrude out of a remainder the spar 140 profile. For example, as shown in FIG. 3, the root 102 may include a shape 168, such as a bulbous shape on the radially lower end of root 102. Thus, it will be understood that the spar 140 need not have a consistent profile. Referring briefly to FIG. 3, the cross-sectional design of the first portion 150, the second portion 160, or both has a changing cross-sectional dimensional width (Dim) at different locations along its radial length. As used herein, the cross-sectional dimensional width (Dim) refers to the largest length of the cross-sectional dimensional width in the plane defined at that radial point along the length L. Although it will be understood that this is by way of non-limiting example. Both, neither, or only one may have a changing profile, shape, size, or combination thereof. For example, referring to FIG. 5, the spar 140 has a cross-sectional dimensional width (Dim A) near the root 102 and a cross-sectional dimensional width (Dim B) near the tip 104, where Dim A is greater than Dim B. Referring back to FIG. 3, in some embodiments, at least a portion of the second portion 160 is defined radially below the radially inner edge 103 of the composite airfoil 62. It will also be appreciated that in some exemplary embodiments, the cross-sectional design may be a different shape, such as a square shape or a rounded shape. In yet other embodiments, the second portion 160 may have a narrower shape on the root 102 end, e.g., where Dim B is greater than Dim A.

In exemplary embodiments, the first portion 150 and the second portion 160 each have at least one wall extending spanwise within the composite airfoil 62 of the airfoil assembly 100. Additionally, in some embodiments, the composite airfoil 62 is a fan blade, e.g., fan blade 30, and may additionally or alternatively have a skin 110 that covers at least a portion of the composite airfoil 62. The skin 110 may be a polymer matrix composite (PMC), epoxy resin, carbon fiber, glass fiber, thermoplastics material, or combinations thereof. Further, the skin 110 may cover an entire surface area of the composite airfoil 62. In other embodiments, the skin 110 may cover only a portion of the surface area of the composite airfoil 62. For example, the skin 110 may cover only the metal portions of the composite airfoil 62, e.g., the leading edge 48. In yet other embodiments, the skin 110 may also cover the spar 140.

In additional embodiments, as depicted in FIG. 4, the composite airfoil 62 may define at least one cavity 111, such as a first cavity 111A and a second cavity 111B. The at least one cavity 111 may be confined between the radially outer edge 101, the radially inner edge 103, the pressure side 78, and the suction side 80. The composite airfoil 62 may further include a foam 112, where the foam 112 fills the at least one cavity 111. The at least one cavity 111 (e.g., the first cavity 111A and the second cavity 111B, as depicted in FIG. 4) may be positioned adjacent the spar 140 such that the spar 140 is surrounded by the foam 112 on the pressure side 78 and the suction side 80. The foam 112 may be polymethacrylimide (PMI) or urethane foams. Further, the foam 112 may also include cast syntactic or expanding syntactic foams, e.g., glass, carbon, or phenolic micro balloons cast in resin.

Generally, the spar 140 acts as an alternative load path to the composite airfoil 62 of the airfoil assembly 100. The first material and the second material used in the spar 140 therefore each, or in combination, have properties that provide stiffness for the airfoil assembly 100, while reducing weight in the airfoil assembly 100. For example, in some exemplary embodiments, the first material may be a lightweight material, such as a composite. The first material may include, e.g., polymer matrix composite (PMC), epoxy resin, carbon fiber, glass fiber, thermoplastics, or combinations thereof. The first material may include any of the aforementioned materials in a unidirectional pre-preg, braided, woven construction, or combinations thereof. By way of example, according to one embodiment, the PMC material is defined in part by prepreg, which is a reinforcement material preimpregnated with a matrix material, such as thermoplastic resin desired for the matrix material. Non-limiting examples of processes for producing thermoplastic prepregs include hot melt pre-pregging in which the fiber reinforcement material is drawn through the molten bath of resin and powder pre-pregging in which a resin is deposited onto the fiber reinforcement material (for example electrostatically) and then adhered to the fiber (for example, in an oven or with the assistance of heated rollers). The prepregs can be in the form of unidirectional tapes or woven fabrics, which are then stacked on top of one another to create the number of stacked plies desired for the part.

According to an alternative option, instead of using a prepreg, with the use of thermoplastic polymers it is possible to have a woven fabric as the first material that has, for example, dry carbon fiber woven together with thermoplastic polymer fibers or filaments. Non-prepreg braided architectures can be made in a similar fashion. With this approach, it is possible to tailor the fiber volume of the part by dictating the relative concentrations of the thermoplastic fibers and reinforcement fibers that have been woven or braided together. Additionally, different types of reinforcement fibers can be braided or woven together in various concentrations to tailor the properties of the part. For example, glass fiber, carbon fiber, and thermoplastic fiber could all be woven together in various concentrations to tailor the properties of the part. The carbon fiber provides the strength of the system, the glass may be incorporated to enhance the impact properties, which is a design characteristic for parts located near the inlet of the engine, and the thermoplastic fibers are the matrix that will be flowed to bind the reinforcement fibers.

Many PMC materials are fabricated with the use of prepreg, which is a fabric or unidirectional tape that is impregnated with resin. Multiple layers of prepreg are stacked to the proper thickness and orientation for the part, e.g., the first portion 150, and then the resin is cured and solidified to render a fiber reinforced composite part. Resins for matrix materials of PMCs can be generally classified as thermosets or thermoplastics. Thermoplastic resins are generally categorized as polymers that can be repeatedly softened and flowed when heated and hardened when sufficiently cooled due to physical rather than chemical changes. Notable example classes of thermoplastic resins include nylons, thermoplastic polyesters, polyaryletherketones, and polycarbonate resins. Specific example of high performance thermoplastic resins that have been contemplated for use in aerospace applications include, polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

In non-limiting examples, the second portion 160 is formed from the second material, which may be a metal, e.g., titanium, aluminum, stainless steel, nickel, alloys thereof, or combinations thereof. The second portion 160 may be manufactured via machined casting, forging, or combinations thereof. However, it will be appreciated that the first material and the second material may comprise any other suitable materials that provide the flexural stiffness and lightweight properties as the material combinations described herein. Further, the method of manufacturing the first portion 150 or the second portion 160 may include any other methods known to those of ordinary skill in the art.

Referring now to FIG. 5 specifically, an exemplary second portion 160 is shown having a chordwise section CS. As mentioned above, the first portion 150 is generally joined to the second portion 160 at an interface 170, as shown in FIG. 3. The interface 170 may be, by way of non-limiting example, one of a scarfed, interwoven, butt, lap j oint, adhesive, or combinations thereof. In particular embodiments, an adhesive is utilized at the interface 170 in combination with a mechanical joint (e.g., scarfed, interwoven, butt, lap joint,etc.).

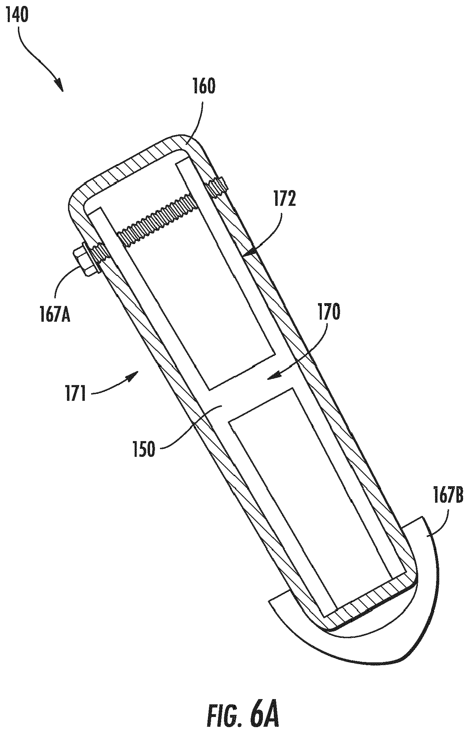

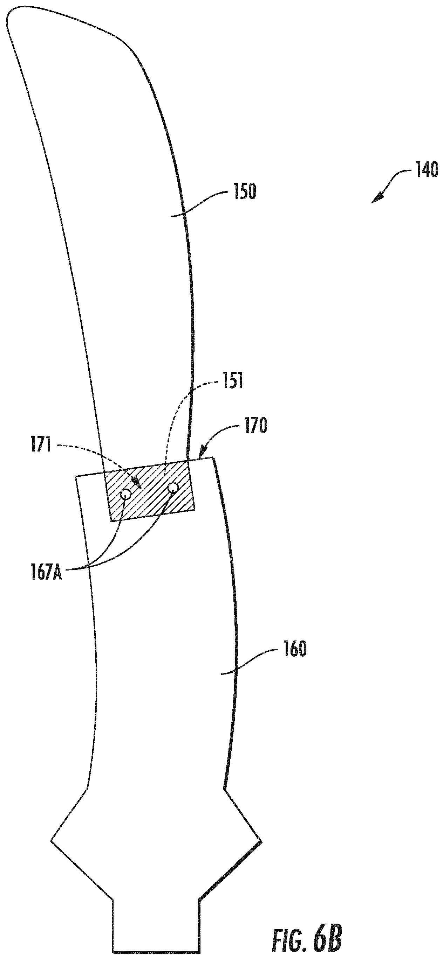

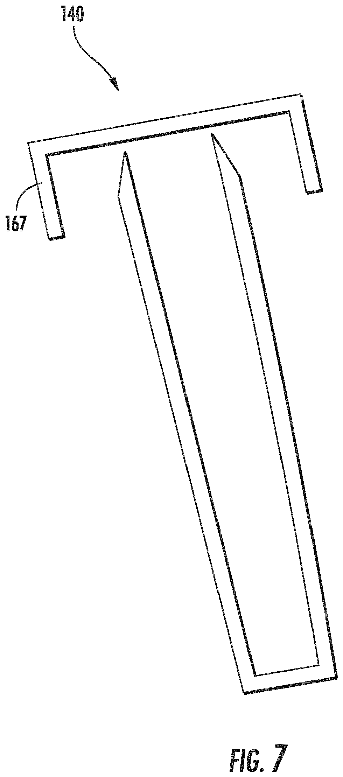

In some embodiments, the first portion 150 may be adhesively bonded to the second portion 160 at the interface 170. Adhesives may include epoxy, polyurethane, or any other kind of adhesive known to those of ordinary skill in the art. In other embodiments, the first portion 150 and the second portion 160 are co-molded together, e.g., via injection molding. The spar 140 may additionally or alternatively include at least one secondary retention feature 167 (see e.g., FIGs. 6 and 7), where the at least one secondary retention feature 167A, 167B couples, e.g., attaches the spar 140 (at the first portion 150 and the second portion 160 of FIG. 3) at or around the interface 170. In some embodiments, the at least one secondary retention feature 167 may refer to fasteners, e.g., screws, bolts, rivets, C-clips, or any combination thereof. In FIG. 6A, for example, the spar 140 is shown with two secondary retention features 167 (shown as a bolt 167A and a C-clip 167B) connecting the second portion 160 to the first portion 150 at the interface 170. In the exemplary embodiment of FIG. 6A, an adhesive material may be on the adjacent surfaces 172 in an overlap 171 region of the interface 170. FIG. 6B shows another exemplary embodiment where a base region 151 of the first portion 150 is positioned within the second portion 160 to define the overlap 171 region of the interface 170. In this embodiment, multiple bolts 167A are included to mechanically connect the second portion 160 to the first portion 150 at the interface 170. In the exemplary embodiment of FIG. 6B, an adhesive material may be on the adjacent surfaces 172 in an overlap 171 region of the interface 170. It should be understood that in alternative embodiments, the a base region 151 of the first portion 150 is positioned around the second portion 160 to define the overlap 171 region of the interface 170.

In FIG. 7, also by way of example, the spar 140 is shown with at least one secondary retention feature 167 in the form of another form of a C-clip. Although the at least one secondary retention feature 167 is only depicted in FIG. 6A, FIG. 6B and

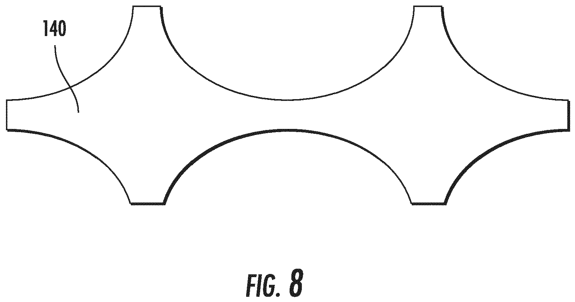

FIG. 7, it will be appreciated that the at least one secondary retention feature 167 may be added to any of the configurations as shown in FIGS. 8-13. The at least one secondary retention feature 167 may further include backer plates to secure the spar 140 (e.g., the first portion 150 to the second portion 160 of FIG. 3).

It will also be appreciated that the spar 140 may include any suitable plurality of portions creating any number of interfaces. Further, it will also be appreciated that the spar 140 may include any suitable plurality of materials. By way of non-limiting example, the spar 140 can include a third portion composed of a third material. For example, the spar 140 may include a third portion with a third material such that the spar 140 has a higher stiffness value, lighter weight, or a combination thereof. The third portion may be above the first portion 150, e.g., on the tip 104 end of the composite airfoil 62, between the first portion 150 and the second portion 160, or below the second portion 160, e.g., on the root 102 end. The third portion may also have a cross-sectional shape along the chordwise direction C. The cross-sectional shape of the third portion may be the same or different as the cross-sectional shape of the first portion 150, the second portion 160, or both. The third material may also be the same as the first material, the second material, or both. However, it will also be appreciated that the third material may be an entirely different material than the first material or the second material.

Referring back to FIG. 5 and as briefly mentioned above, at least one of the first portion 150 or the second portion 160 may have a shape at a cross-section CS along the chordwise direction C. In FIG. 5 specifically, the cross-section CS is shown taken across the second portion 160; however, in alternative or additional embodiments, the cross-section CS may be taken at any point along the spar 140. The cross-sectional shape may be a polygonal cross-section or a circular cross-section. As used herein, the terms "polygon," "polygonal," or variations thereof refer to a plane figure with at least three straight sides and angles. In particular, the polygonal cross-section may be an I cross-section, a C cross-section, an H cross-section, a Z cross-section, an X cross-section, a two-opposing-plate shape, or any combination thereof. The circular cross-section may be a round circle cross-section, an elliptical cross-section, a squavol (e.g., a square and oval combination) cross-section, or any combination thereof. However, it will further be appreciated that the cross-sectional shape may be any shape that supports the composite airfoil 62, including a geometric or a non-geometric profile.

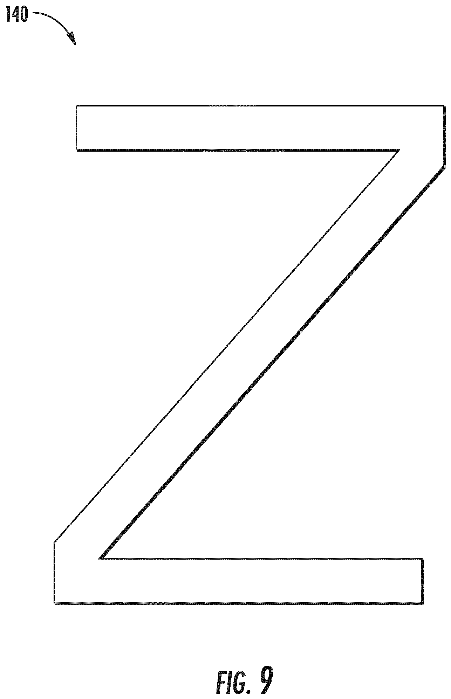

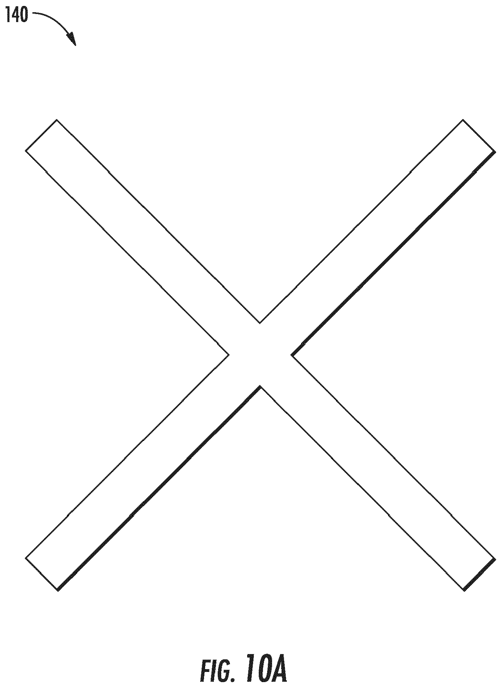

Referring now to FIGS. 8-13, various embodiments of the cross-sectional shape of the spar 140 taken at the cross-section denoted by the dotted line in FIG. 5 are shown. In FIG. 6A, for example, the cross-sectional shape of the second portion 160 may have an I cross-section. In other embodiments, as shown in FIG. 7, the cross-sectional shape of the second portion 160 is a C cross-section. In still other embodiments, the shape of the second portion 160 may be an H cross-section, such as a modified H cross-section, as illustrated in FIG. 8. It will be appreciated that these shapes are exemplary shapes only; the first portion 150 or second portion 160 (or both) may take any shape that yields a lighter and stronger airfoil assembly 100, e.g., a Z shape (FIG. 9) or an X shape (FIG. 10A).

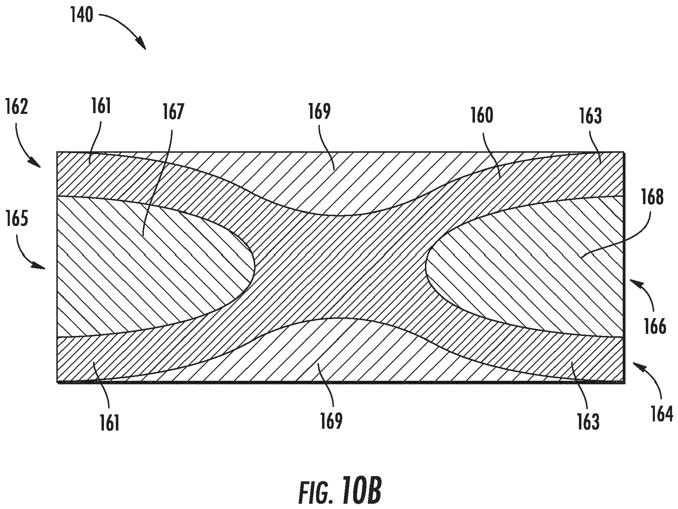

Referring to FIG. 10B, the spar 140 is shown as including the second portion 160 having an elongated X-shape with a pair of first flanges 161 on a first side 162 and a pair of second flanges 163 on second side 164 opposite from the first side 162. In the embodiment shown, the pair of first flanges 161 are oriented in a first direction that is substantially opposite of the orientation of the pair of second flanges 163 in a second direction. Although this embodiment is shown as a second portion 160, it is understood that it similarly applies the first portion 150 if desired. In the embodiment shown, the second portion 160 is formed of a second material (e.g., a metal) defining respective cavities 165, 166 between each pair of flanges (i.e., cavity 165 between the pair of first flanges 161 and cavity 166 between the pair of second flanges 163) having a foam 167 positioned therein. Additionally, a plurality of composite plies 169 are positioned in the outer spaces defined between the pair of first flanges 161 and the pair of second flanges 163.

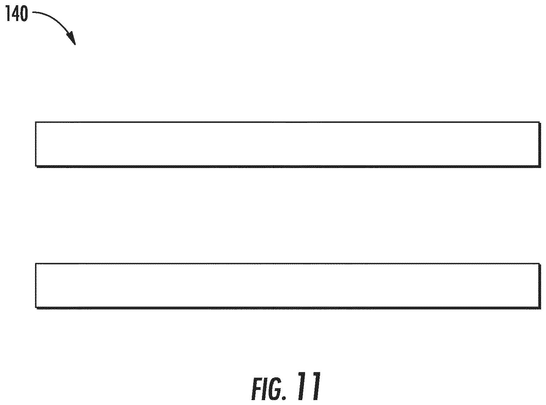

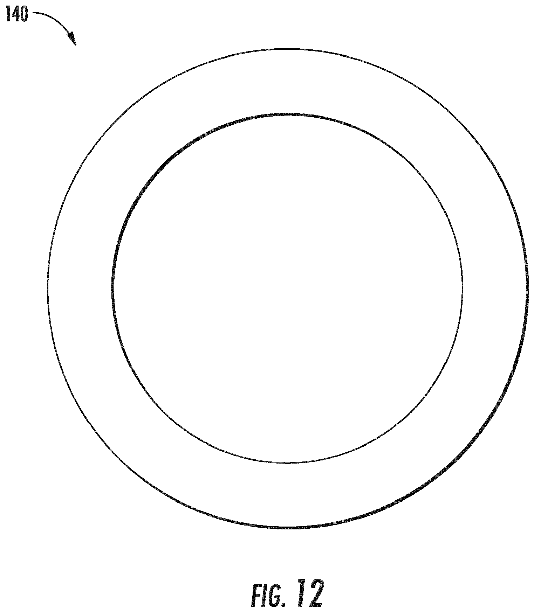

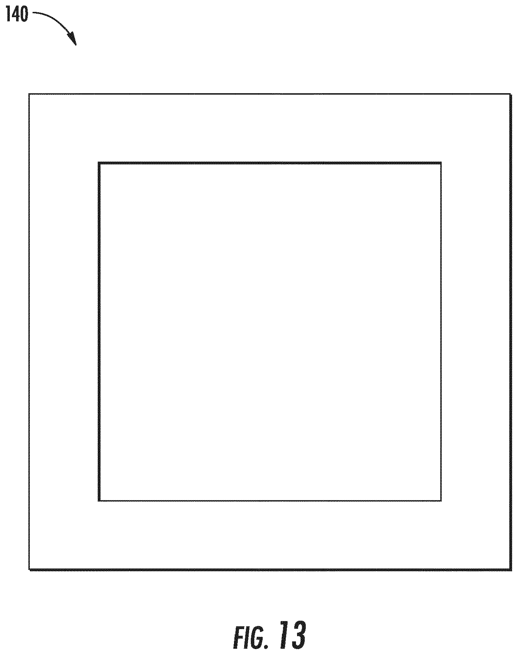

In other embodiments, the cross-sectional shape may be a two-opposing-plates shape, e.g., with two discrete, unconnected segments, as shown in FIG. 11. Although the two-opposing-plates shape is shown with two substantially similar segments in parallel, it will be appreciated that the segments may alternatively be different, e.g., in size, width, length, thickness, or combinations thereof. Further, in other embodiments, the two segments may not be parallel; rather, the segments could be angled towards each other, angled away from each other, or in any other configuration. In still other embodiments, the cross-sectional shape of the spar 140 may have a circular shape, such as an O shape, as shown in FIG. 12, or an elliptical shape. The spar 140 may further have a cross-section shape that is a polygonal shape. While a square shape is shown in FIG. 13, it will be understood that this is by way of non-limiting example and that alternative polygonal shapes (e.g., rectangular shape, etc.) may be utilized. Additionally, although FIGS. 8-13 depict the cross-section of the spar 140 within the second portion 160, e.g., with the second portion 160 as having the cross-sectional shape, it will be appreciated that the first portion 150 may additionally or alternatively have the cross-sectional shape in certain embodiments. Further, the cross-sectional shape of the first portion 150 may be the same or different from the cross-sectional shape of the second portion 160 in such embodiments.

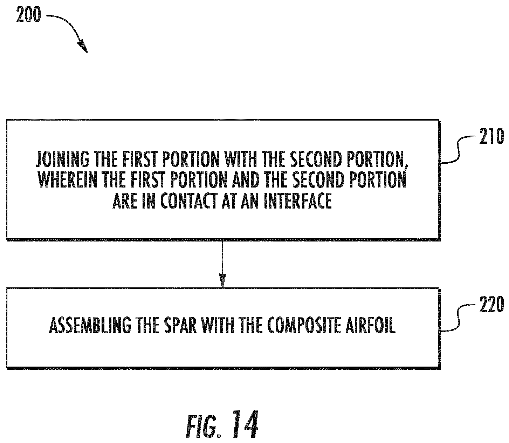

A method 200 of assembling an airfoil assembly 100, by way of non-limiting example, is described herein. As shown in FIG. 14, the method 200 generally includes, at 210, joining the first portion with the second portion, where the first portion and the second portion are in contact at an interface to form the spar; and, at 220, assembling the spar with the composite airfoil.

At 210, method 200 includes joining the first portion and the second portion of the spar, where the first portion and the second portion are in contact at the interface. For example, referring again to FIG. 4, joining can include one of a scarfing, interweaving, abutting, or lapping the first portion 150 with the second portion 160. In some embodiments, the first portion 150 may be formed separately from the second portion 160 prior to being joining the first portion 150 and the second portion 160. In certain embodiments, the first portion 150 may be formed simultaneously as the second portion 160. However, it will be appreciated that the second portion 160 may alternatively be formed prior to forming the first portion 150, as described more in depth below.

Further, joining the first portion 150 and the second portion 160 at the interface 170 may be achieved using an adhesive. Adhesives may include epoxy, polyurethane, or any other kind of adhesive known to those of ordinary skill in the art. Additionally, where adhesives are used to bond the first portion 150 to the second portion 160 at the interface 170, the method 200 may further include curing the adhesive.

In some embodiments, the method 200 may include curing the first portion 150 prior to joining the first portion 150 with the second portion 160, applying adhesive to at least one of the first portion 150 and the second portion 160 at the interface 170, and curing the adhesive after coupling the first portion 150 with the second portion 160.

In certain non-limiting embodiments where the first portion 150 is uncured prior to coupling with the second portion 160, the method 200 may include applying adhesive to at least one of the first portion 150 and the second portion 160 at the interface 170, and co-curing the first portion 150 and the adhesive. Co-curing the first portion 150 and the adhesive may include curing the first portion 150 and the adhesive substantially simultaneously.

In one non-limiting example, the method 200 may include layup and curing the second portion 160, layup and curing the first portion 150, and adhesively bonding first portion 150 and the second portion 160 together. It is further contemplated that curing can occur in the simultaneously as the joining of the first portion 150 and the second portion 160. In another aspect of the disclosure herein, the first and second materials may be weaved as a preformed structure transitioning from the first material to the second material and then using injected resin cure. It should be understood that these processes are not all inclusive and that other processes of bonding the parts as described herein to form the interface 170 are contemplated (e.g., as a secondary bonding retention mechanism, such as in combination with a mechanical joint).

In yet other embodiments, the method 200 may include adding the foam within the internal cavity 111 of the composite airfoil 62, and also adding the skin 110 to at least a portion of the composite airfoil 62. Both of these optional method steps may be included within assembling step at 220. The foam 112 and the skin 110 may be added before the adhesive or the first portion 150 is cured. However, in some embodiments, the adhesive or the first portion 150 may be cured prior to adding the foam 112 and the skin 110.

Further, at 220, the method 200 may include assembling the spar 140 to the composite airfoil 62. As used herein, "assembling" may refer to "constructing," "building," "joining," "connecting," "uniting," or other meaning as known to those of ordinary skill in the art. In particular, assembling may refer to inserting, bonding, or otherwise connecting the spar 140 with the composite airfoil 62.

In an exemplary embodiment, the spar 140 may be fully formed, e.g., with the first portion 150 and the second portion 160 joined together, prior to being assembled with the composite airfoil 62. For example, the composite airfoil 62 may be formed or manufactured around the spar 140 via additive manufacturing.

In other embodiments, the composite airfoil 62 may be fully formed before the spar 140 is added to the composite airfoil 62, e.g., through insertion or any other means. The composite airfoil 62 may be formed separately from the spar 140. In some embodiments, the composite airfoil 62 and the first portion 150 may be formed by the same method, e.g., additive manufacturing. Further, composite airfoil 62 and at least the first portion 150 may be formed simultaneously.

The method 200 may further include shaping at least one of the first portion 150 or the second portion 160. For example, the first portion 150, the second portion 160, or both may be shaped, e.g., into a wedge shape along the chordwise axis C, as shown in FIG. 5, to have a Dim A near the root 102 of the composite airfoil 62 and a Dim B near the tip 104 of the composite airfoil 62, where Dim A is greater than Dim B. This shaping may occur during machine manufacturing, such as through additive manufacturing or 3D printing the first portion 150, second portion 160, or both. In some embodiments, however, the first portion 150 may be shaped after being fully manufactured, for example, by removing (e.g., shaving, whittling, sanding, etc.) layers of the first portion 150 until it can fit into the second portion 160, or vice versa. When the first portion 150 is able to fit into the second portion 160, the method 200 may include inserting the second portion 160 into the first portion 150. In certain non-limiting embodiments, the first portion 150 is uncured prior to joining with the second portion 160.

Additionally, as briefly mentioned above, the spar 140 may additionally or alternatively include at least one secondary retention feature 167, where the at least one secondary retention feature 167 couples, e.g., attaches, the first portion 150 and the second portion 160 at or around the interface 170. The method 200 may further include, in such embodiments, adding the at least one secondary retention feature 167 at or around the interface 170 to couple the first portion 150 to the second portion 160. For example, the at least one secondary retention feature 167 may be added to the spar 140 to bolt, rivet, or clamp the first portion 150 to the second portion 160. The at least one secondary retention feature 167 may thus include bolts, rivets, or clamps (e.g., C clips), or a combination thereof. Furthermore, the method 200 may also include adding backer plates to secure the first portion 150 to the second portion 160.

As mentioned previously, the spar 140 may additionally or alternatively include a third material. In embodiments with a third or more portions, the spar 140 may be manufactured in shorter segments in order to vary the cross-sectional shape, the material, or both between each portion. The method 200 may be modified as necessary to accommodate the third portion. For example, at 210, where the first portion 150 is joined with the second portion 160, the method 200 may further include joining the third portion to the first portion 150, the second portion 160, or both. Additionally, in embodiments where the first material and the third material both include composite materials, the first portion 150 and the third portion may be formed simultaneously and/or using the same methods.

In still further embodiments, the composite airfoil 62 may further include one or more strips of the second material on either side of the first portion 150 and/or the second portion 160 (e.g., as reinforcement). In exemplary embodiments where the second material is a metal material, the metal materials may include titanium, aluminum, stainless steel, nickel, alloys thereof, and/or combinations thereof. The one or more strips of the second material on the first portion 150 may be separated from the second portion 160 such that the one or more strips of the second material on the first portion 150 are discontinuous from the second material of the second portion 160. However, the one or more strips of the second material may alternatively be continuous, e.g., where the one or more strips of the second material extend from the second portion 160 towards the tip 104 and layer on top of the first portion 150.

Further still, in non-limiting examples, the spar 140 may include a plurality of branches extending from the body of the spar 140. For example, the first portion 150 and/or the second portion 160 may include a plurality of branches to further help support the composite airfoil 62. The plurality of branches may be the same material as the material from which they extend.

The airfoil assembly 100 and/or the spar 140 may be used in any compatible machine across different industries. One of ordinary skill in the art will recognize that the inherent flexibility of the airfoil assembly 100 and/or the spar 140 allows for adaptation for use in different industrial machines of varying sizes.

Further aspects are provided by the subject matter of the following clauses:

A spar configured to support an airfoil, the spar comprising: a body defining a root and a tip, the body comprising: a first portion comprising a first material; and a second portion comprising a second material joined to the first portion at an interface, wherein the second material is different from the first material.

The spar of any preceding clause, wherein the first material comprises a composite, and wherein the second material comprises a metal.

The spar of any preceding clause, wherein the spar further comprises an attachment, and wherein the attachment is positioned below a radially inner edge of the airfoil.

The spar of any preceding clause, wherein the second portion extends from the root and is configured to extend in a radial direction for a length of 75% of a span-length or less of the airfoil.

The spar of any preceding clause, wherein at least one of the first portion or the second portion further comprises a cross-sectional shape, wherein the cross-sectional shape is a polygonal shape.

The spar of any preceding clause, wherein at least one of the first portion or the second portion further comprises a cross-sectional shape, wherein the cross-sectional shape is a circular shape.

The spar of any preceding clause, wherein the second portion comprises spaced flanges having a Dim A at a first distal location of the second portion and a Dim B at a second distal location of the second portion, where Dim A is greater than Dim B.

The spar of any preceding clause, wherein the second portion comprises spaced flanges having a Dim A at a first distal location of the second portion and a Dim B at a second distal location of the second portion, where Dim B is greater than Dim A.

The spar of any preceding clause, wherein the first portion and the second portion are adhesively bonded together.

The spar of any preceding clause, further comprising: at least one secondary retention feature, wherein the at least one secondary retention feature couples the first portion and the second portion.

The spar of any preceding clause, wherein the first portion has a changing cross-sectional shape along its length.

The spar of any preceding clause, wherein the second portion has a changing cross-sectional shape along its length.

The spar of any preceding clause, wherein the first portion has a base region positioned within the second portion to define an overlap region of the interface.

The spar of any preceding clause, wherein the first portion has a base region positioned around the second portion to define an overlap region of the interface.

An airfoil assembly for a turbine engine, the airfoil assembly comprising: a composite airfoil comprising a pressure side and a suction side extending in an axial direction between a leading edge and a trailing edge defining a chordwise direction and extending in a radial direction between a radially outer edge and a radially inner edge defining a spanwise direction and having a span-length; and the spar of any preceding clause.

The airfoil assembly of any preceding clause, the airfoil assembly further comprising: a skin covering at least a portion of the composite airfoil.

The airfoil assembly of any preceding clause, wherein the composite airfoil defines at least one cavity, and wherein the airfoil assembly further comprises: a foam filling the at least one cavity.

The airfoil assembly of any preceding clause, wherein the second portion extends in the radial direction for a length of 75% of the span-length.

The airfoil assembly of any preceding clause, wherein the first portion and the second portion are adhesively bonded together.

The airfoil assembly of any preceding clause, further comprising: at least one secondary retention feature, wherein the at least one secondary retention feature couples the first portion and the second portion.

The airfoil assembly of any preceding clause, wherein the composite airfoil is a fan blade.

A method of assembling the airfoil assembly of any preceding clause; the method comprising: joining the first portion with the second portion, wherein the first portion and the second portion are in contact at the interface; and assembling the spar with the composite airfoil.

The method of airfoil assembly of any preceding clause, wherein the first material is a composite, the method further comprising: curing the first portion prior to joining the first portion with the second portion; applying an adhesive to at least one of the first portion and the second portion at the interface; and curing the adhesive after coupling the first portion with the second portion.

The method of airfoil assembly of any preceding clause, wherein the first material is a composite and the second material is a metal, the method further comprising: applying an adhesive to at least one of the first portion and the second portion at the interface; and co-curing the first portion and the adhesive.

The method of airfoil assembly of any preceding clause, the method further comprising: adding at least one secondary retention feature at the interface to couple the first portion to the second portion.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A spar (140) configured to support a composite airfoil (62) comprising a pressure side (78) and a suction side (80) extending in an axial direction (A) between a leading edge (48) and a trailing edge (46) defining a chordwise direction (C) and extending in a radial direction (R) between a top edge (101) and a bottom edge (103) defining a spanwise direction (S) and having a span-length (L), the spar (140) defining a root (102) and a tip (104) and comprising:
a first portion (150) comprising a first material (155); and
a second portion (160) comprising a second material (165) joined to the first portion (150) at an interface (170),
wherein the second material (165) is different from the first material (155).

2. The spar (140) of any preceding claim, wherein the first material (155) comprises a composite, and wherein the second material (165) comprises a metal.

3. The spar (140) of any preceding claim, wherein the composite airfoil (62) defines a flowpath (105) radially above the bottom edge (103), wherein the spar (140) further comprises an attachment point (174), and wherein the attachment point (174) is positioned below the flowpath (105).

4. The spar (140) of any preceding claim, wherein the second portion (160) extends in the radial direction (R) for a length (L-160) of about 75% of the span-length (L) or less.

5. The spar (140) of any preceding claim, wherein at least one of the first portion (150) or the second portion (160) further comprises a cross-sectional shape, wherein the cross-sectional shape is a polygonal shape or a circular shape.

6. The spar (140) of any preceding claim, wherein the second portion (160) has a Dim A near the root (102) of the spar (140), and a Dim B near the tip (104) of the spar (140), where Dim A is greater than Dim B.

7. The spar (140) of any preceding claim, wherein the first portion (150) and the second portion (160) are adhesively bonded together.

8. The spar (140) of any preceding claim, further comprising:
at least one secondary retention feature (167), wherein the at least one secondary retention feature (167) couples the first portion (150) and the second portion (160).

9. An airfoil assembly (100) for a turbine engine (10), the airfoil assembly (100) comprising:
a composite airfoil (62) comprising a pressure side (78) and a suction side (80) extending in an axial direction (A) between a leading edge (48) and a trailing edge (46) defining a chordwise direction (C) and extending in a radial direction (R) between a top edge (101) and a bottom edge (103) defining a spanwise direction (S) and having a span-length (L); and
a spar (140) configured to support the composite airfoil (62) and defining a root (102) and a tip (104), the spar (140) comprising:
a first portion (150) comprising a first material (155); and
a second portion (160) comprising a second material (165) and joined to the first portion (150) at an interface (170),
wherein the second material (165) is different from the first material (155).

10. The airfoil assembly (100) of claim 9, the airfoil assembly (100) further comprising:
a skin (110), wherein the skin (110) covers at least a portion of the composite airfoil (62).

11. The airfoil assembly (100) of claim 9 or 10, the composite airfoil (62) defining at least one cavity (111) and further comprising:
a foam (112), wherein the foam (112) fills the at least one cavity (111).

12. The airfoil assembly (100) of any of claims 9-11, wherein the second portion (160) extends in the radial direction (R) for a length (L-160) of about 75% of the span-length (L).

13. The airfoil assembly (100) of any of claims 9-12, wherein the first portion (150) and the second portion (160) are adhesively bonded together.

14. The airfoil assembly (100) of any of claims 9-13, further comprising:
at least one secondary retention feature (167), wherein the at least one secondary retention feature (167) couples the first portion (150) and the second portion (160).

15. A method (200) of assembling an airfoil assembly (100) having a composite airfoil (62) and a spar (140) configured to support the composite airfoil (62) and defining a root (102) and a tip (104), the composite airfoil (62) comprising a pressure side (78) and a suction side (80) extending in an axial direction (A) between a leading edge (48) and a trailing edge (46) defining a chordwise direction (C) and extending in a radial direction (R) between a top edge (101) and a bottom edge (103) defining a spanwise direction (S) and having a span-length (L), the composite airfoil (62) defining a flowpath (105) radially below the bottom edge (103), a the spar (140) comprising a first portion (150) comprising a first material (155), and a second portion (160) comprising a second material (165) and joined to the first portion (150) at an interface (170), wherein the second material (165) is different from the first material (155); the method (200) comprising:
joining the first portion (150) with the second portion (160), wherein the first portion (150) and the second portion (160) are in contact at the interface (170); and
assembling the spar (140) with the composite airfoil (62).
